# EUROPÄISCHE PATENTSCHRIFT

(11) **EP 2 165 110 B1**
(45) Veröffentlichungstag und Bekanntmachung des Hinweises auf die Patenterteilung: **24.02.2016**
(21) Anmeldenummer: 08773674.0
(22) Anmeldetag: 26.06.2008
(51) Int. Cl.: F16L 59/065, E04B 1/80, B29C 63/02, B29C 53/04

(54) **VAKUUM-ISOLATIONS-PANEEL UND VERFAHREN ZU DESSEN HERSTELLUNG**
VACUUM INSULATION PANEL, AND METHOD FOR THE PRODUCTION THEREOF
PANNEAU ISOLANT SOUS VIDE ET SON PROCÉDÉ DE PRODUCTION

(30) Priorität: 30.06.2007 DE 102007030689
(43) Veröffentlichungstag der Anmeldung: 24.03.2010
(73) Patentinhaber: Porextherm-Dämmstoffe GmbH, 87437 Kempten (DE)
(72) Erfinder: EBERHARDT, Hans-Frieder, 89537 Giengen-Brinz (DE); KNOLL, Steffen, 87437 Kempten (DE); SCHREIB, Ina, 01189 Dresden (DE)
(74) Vertreter: Hoppe, Lars
(86) Internationale Anmeldenummer: PCT/EP2008/005189
(87) Internationale Veröffentlichungsnummer: WO 2009/003630

(56) Entgegenhaltungen:
- DE-A1-102005 054 012
- DE-U1-202006 008 477
- US-A- 5 240 527
- US-A- 5 685 938
- US-A- 5 900 299

## Beschreibung

Die Erfindung betrifft ein Vakuumisolationspaneel gemäß Anspruch 1 und ein Verfahren zu dessen Herstellung gemäß Anspruch 6.

Vakuumisolationspaneele werden zur Wärmedämmung u.a. in Kühlschränken und Transportbehältern eingesetzt. Ein weiteres Einsatzgebiet für Vakuumisolationspaneele liegt im Bausektor, wo immer bessere Wärmedämmwerte bei möglichst geringen Aufbauhöhen der verwendeten Dämmstoffe gefordert werden. Vakuumisolationspaneele bestehen in der Regel aus einem plattenförmigen, druckstabilen Kernmaterial, welches in einer Hochbarrierefolie gasdicht verpackt und auf ca. 5mbar Innendruck evakuiert wird. Die Kerne werden vor dem Verpacken entsprechend den Anforderungen an den Einsatz- bzw. Verbauungsort auf Maß geschnitten. Zur Dämmung größerer Flächen können mehrere Isolationspaneele bündig aneinandergelegt werden.

Zur Herstellung der Vakuum-Isolations-Paneele werden die Paneelkerne herkömmlicherweise in vorgefertigte Beutel eingelegt und anschließend über die offene Seite evakuiert und versiegelt. Die Beutel weisen dabei herstellungsbedingt drei Siegelränder auf. Aus dieser Herstellungsweise ergibt sich, dass am fertigen Paneel die Siegellaschen von den Stirnseiten in einem Winkel von ca. 90° abstehen und daher im Anschluss an den Verpackungs- und Evakuiervorgang manuell umgelegt und mit Klebeband fixiert werden müssen.

Bedingt durch die an den Stirnseiten vorhandenen Siegellaschen wird ein bündiges Aneinanderlegen der Vakuumisolationspaneele zur Flächendämmung erschwert. Zudem stellen die Fügestellen Wärmebrücken dar, die die Dämmwerte des Vakuumisolationspaneels erheblich verschlechtern. Um möglichst ebene Stoßkanten am Paneel zu erreichen, müssen die Fügelaschen/Siegelnähte so ausgebildet werden, dass eine maximale Anzahl von ebenen Flächen am Paneel vorhanden ist.

Die DE 100 58 566 stellt ein Vakuumisolationspaneel mit einem mit Folie umhüllten Wärmedämmkörper vor. Der Wärmedämmkörper wird dabei von einem einzigen ebenen Folienzuschnitt eingehüllt. An der Überlappungsstelle zwischen dem Anfang des Folienzuschnitts und dessen Ende wird die Folie verschweißt, sodass die dadurch gebildete Schweißnaht quer zum Wicklungsumfang des Formkörpers verläuft. Die so entstandene Schweißlasche wird an den Formkörper angelegt. An den verbliebenen offenen Stirnseiten wird die Folie gefaltet und verschweißt.

Nachteilig an dieser Art der Einhüllung des Wärmedämmkörpers ist, dass durch das Straffziehen des Folienbogens Kräfte auf die Kanten des empfindlichen, mikroporösen Wärmedämmkörpers einwirken, die nicht selten zum Ausbrechen dieser Kanten führen und eine schlechtere Passform des fertigen Vakuumisolationspaneels, beispielsweise in einem Vakuumisolationspaneelverbund, bewirken. Durch die Verwendung von Folienzuschnitten muss die Vorrichtung zum Einhüllen außerdem bei jeder Änderung der Maße der einzuhüllenden Wärmedämmkörper angepasst werden, wodurch unproduktive Rüstzeiten entstehen. Zusätzlich dazu müssen eine Vielzahl unterschiedlich dimensionierter Folienbögen vorgehalten werden, wodurch ein höherer logistischer Aufwand entsteht.

Aus der US 5 240 527 A ist ein Isolationspaneel bekannt, bei dem eine zweiteilige Umhüllung um einen Isolationskörper gelegt wird und die beiden Enden der Umhüllung im Randbereich einer Hauptseite des Isolationspaneels aufeinander zuweisend umgelegt und fixiert werden.

Aufgabe der vorliegenden Erfindung ist es, ein Vakuumisolationspaneel zur Verfügung zu stellen, das die oben genannten Nachteile überwindet, flexibel in einer Vielzahl von Einsatzbereichen verwendet werden kann, dabei ausgezeichnete Dämmwerte aufweist und einfach und kostengünstig in verschiedenen Dimensionen hergestellt werden kann.

Diese Aufgabe wird gelöst durch ein Vakuumisolationspaneel mit den Merkmalen des Anspruchs 1 sowie ein Verfahren gemäß Anspruch 6. Weitere vorteilhafte Ausführungsformen der Erfindung sind Gegenstand der abhängigen Ansprüche. Das erfindungsgemäße Vakuumisolationspaneel verfügt über einen Wärmedämm/Stützkörper in einer gasdichten Umhüllung, und ist dadurch gekennzeichnet, dass die vom Stützkörper abweisenden Enden der Siegelnähte/-laschen aufeinander zuweisend gefaltet am Stützkörper (11) in dessen Mittelbereich angeordnet sind. Die Bestandteile können insbesondere Abschnitte einer besonders gasdichten Hochbarrierefolie sein, und zur Verbesserung der Wärmedämmeigenschaften des Vakuumisolationspaneels zusätzlich entsprechende Beschichtungen, wie beispielsweise Metallisierungsschichten, aufweisen. Als besonders günstig erweist es sich, wenn die Siegellaschen flach an die Hauptflächen des Stützkörpers angelegt und fixiert werden. Die Fixierung kann beispielsweise durch weiteres Verschweißen oder Verkleben der Siegellaschen mit der Hauptfläche des Vakuumisolationspaneels erfolgen. Dabei ist es erfindungsgemäß, die Siegellaschen so zu falten, dass diese aufeinander zu weisen. Dadurch entsteht im Mittelbereich des Vakuumisolationspaneels ein verstärkter Streifen, der beispielsweise zum Auftrag eines Klebemittels verwendet werden kann.

Ein Bestandteil der Umhüllung wird um den im wesentlichen quaderförmigen Paneelkern, welcher aus mikroporösem Material, wie beispielsweise gefällter Kieselsäure, pyrogener Kieselsäure, oder Aerogel, aus offenzelligem Polyurethanschaum, offenzelligem Polystyrolschaum, offenzelligem Polyisocyanuratschaum oder Fasermaterialen gepresst bzw. hergestellt wird, gelegt. Dabei bleibt ein im wesentlichen streifenförmiger Bereich frei. In den freigebliebenen Bereich, der je nach Abmessung des Paneelkerns bzw. in Abhängigkeit von der Größe des ersten Bestandteils unterschiedliche Abmessungen aufweisen kann, wird ein entsprechender zweiter, auf die Abmessung abgestimmter Bestandteil der Umhüllung eingesetzt, um so eine vollständige Verpackung des Paneelkerns zu realisieren. Der zweite Bestandteil der Umhüllung ist dabei schmaler als die Paneelbreite ausgebildet. Es ist somit möglich, trotz Abweichungen ein den Abmessungen des Paneelkerns, die beispielsweise auch aufgrund von Fertigungstoleranzen auftreten können, eine straff anliegende Umhüllung zu realisieren und dabei flexibel auf unterschiedliche Abmessungen des Paneelkerns zu reagieren. Die Bestandteile können auch über ein an der Bogeninnenseite befindliches Füge-(Siegel)-Medium miteinander verbunden bzw. verschweißt werden.

Bevorzugt werden die überstehenden Bereiche der Umhüllungsbestandteile an der Stirnseite des erfindungsgemäßen Vakuumisolationspaneels eingefaltet. Die eingefalteten Bereiche können anschließend bis auf eine Fehlstelle dicht versiegelt werden. Über die Fehlstelle kann das Vakuumisolationspaneel evakuiert werden. Nach der Evakuierung wird die Fehlstelle abschließend dicht versiegelt.

In einer bevorzugten Ausführungsform der Erfindung ist vorgesehen, dass die Bestandteile im Bereich der Siegelnähte eine weitere funktionelle Beschichtung aufweisen. Die Beschichtung verbessert dabei die Verbindung zwischen den Bestandteilen und dichtet die Siegelnähte zusätzlich ab. Denkbar ist hierbei beispielsweise eine Beschichtung der zu versiegelnden bzw. zu verbindenden Bereiche der Bestandteile mit einer ORMOCER®-Schicht, um so eine zusätzliche Barriereschicht an der empfindlichen Siegelnaht zu schaffen. Des Weiteren kann eine entsprechende Beschichtung im Bereich der Siegelnähte auch auf der Außenseite des fertigen Vakuumisolationspaneels aufgebracht sein. Hierbei wäre beispielsweise der Auftrag eines Kontaktklebers denkbar, der die Vakuumisolationspaneele bei flächiger Montage fixiert.

Als besonders empfehlenswert wird angesehen, wenn die Bestandteile aus verschiedenen Materialien bestehen und/oder unterschiedliche Materialstärken aufweisen. Bevorzugt ist hierbei der zweite, schmälere Bestandteil, der den durch den ersten Bestandteil freigelassenen Bereich abdeckt, als Steckschiene oder mit Aufnahmeelementen für entsprechende Montagehilfen ausgebildet. Über diese Schiene bzw. die Aufnahmeelemente lassen sich die Vakuumisolationspaneele dann besonders einfach und schnell montieren. Zur Flächendämmung können die Vakuumisolationspaneele so auch besonders einfach verbunden werden. Der zweite Bestandteil ist dabei aus einem Material gefertigt, dass mit dem ersten Bestandteil verbunden bzw. verschweißt werden kann bzw. weist im Bereich der Schweiß- bzw. Siegelnähte entsprechend geeignete Siegel-, Klebe- und/oder Schweißbeschichtungen auf.

Das erfindungsgemäße Verfahren zur Bildung eines Vakuumisolationspaneels mit einem Stützkörper und einer gasdichten Umhüllung, insbesondere einer Folienumhüllung, die wenigstens zwei Bestandteile, insbesondere Folienabschnitte, aufweist, umfasst mehrere Schritte. Zunächst wird der Stütz- oder Wärmedämmkörper mit einem Bestandteil der gasdichten Umhüllung umhüllt. Dabei wird ein Bereich in wenigstens einer Hauptfläche des Stütz- oder Wärmedämmkörpers ausgespart. In den ausgesparten Bereich wird nachfolgend wenigstens ein zweiter Bestandteil der gasdichten Umhüllung eingesetzt. Es kann herstellungstechnisch durchaus günstiger sein, zuerst den zweiten schmaleren Bestandteil aufzusetzen und anschließend den ersten größeren Teil anzufalten. Die überlappenden Bereiche der Bestandteile werden anschließend unter Bildung je einer Siegelnaht an der Oberseite verbunden und an der Stirnseite durch Quersiegelnähte abgeschlossen. Nach Einfaltung der jeweiligen Quersiegelnaht am Vakuumisolationspaneel wird die gasdichte Umhüllung evakuiert. Durch das Evakuieren wird auch erreicht, dass die gasdichte Umhüllung eng am Stütz- oder Wärmedämmkörper anliegt, wodurch das erfindungsgemäße Vakuumisolationspaneel fertig gestellt wird.

Das Verfahren stellt auch sicher, dass durch die direkte Umhüllung des Kerns Zugaben zum Einschieben des Paneelkerns in einen Drei-Rand-Siegelbeutel oder einen Schlauch vermieden und Fertigungstoleranzen ausgeglichen werden. Die eng an dem Stütz- oder Wärmedämmkörper anliegende Folie ermöglicht zudem ein nahezu wärmebrückenfreies Stoßen verschiedener Vakuumisolationspaneele aneinander, da durch die Position der Siegelnähte die Vakuumisolationspaneele über ebene Fügeflächen verfügen. Durch die straffe Umhüllung des Paneelkerns wird zudem die Faltenbildung beim Evakuieren minimiert. Durch das erfindungsgemäße Verfahren können somit passgenauere Vakuumisolationspaneele hergestellt werden, da der zusätzliche Folienauftrag durch das Umkleben der Laschen des Drei-Rand-Siegelbeutels nicht mehr berücksichtigt werden muss.

Durch das erfindungsgemäße Verfahren können im Gegensatz zur Verwendung von vorkonfektionierten Folienbögen oder von Folienbeuteln Vakuumisolationspaneele nahezu jeder Größe hergestellt werden. Auch ist eine individuelle Anpassung der Größe und Form der Vakuumisolationspaneele möglich. Es kann beispielsweise die Breite des ersten Bestandteils der Umhüllung unabhängig von der letztendlichen Dimension des Vakuumisolationspaneels konstant gehalten werden. Eine Komplettierung der Umhüllung erfolgt dann über den zweiten Bestandteil, der in seiner Breite variabel ist und vor dem Einsetzen an die durch den ersten Bestandteil freigelassene Aussparung angepasst wird. Rüstzeiten und die damit verbundenen Kosten fallen somit nur noch für die Anpassung der Breite bzw. den Wechsel des Materials für den zweiten Bestandteil der Umhüllung an. Zusätzlich wird auch vermieden, dass die empfindliche Barrierefolie, wie dies beispielsweise bei der Verwendung vorgefertigter Beutel der Fall ist, über eine Formschulter gezogen werden muss, woraus eine Beschädigung der Barriereschichten und damit eine Erhöhung der Permeationseigenschaften einhergehen kann.

Bevorzugt wird die überstehende Umhüllung in einem zusätzlichen Verfahrensschritt an den Stirnseiten des Stützkörpers eingefaltet. Durch die verwendete Falttechnik, insbesondere in Verbindung mit der Position der Siegelnähte/-laschen, verfügt das Vakuumisolationspaneel über ebene Fügeflächen und weist nur an den kurzen Stirnseiten Faltungen auf. Dadurch wird ein nahezu wärmebrückenfreies Stoßen der Seitenkanten verschiedener Vakuumisolationspaneele aneinander möglich.

Eine weitere vorteilhafte Ausführungsform des vorliegenden Verfahrens sieht vor, dass die Bestandteile der Umhüllung aus verschiedenen Materialien gefertigt sind, unterschiedliche Materialstärken aufweisen oder vorgeformt vorliegen. Der zweite Bestandteil kann hierbei beispielsweise als Schiene oder Leiste ausgebildet sein, die in der Hauptfläche des Vakuumisolationspaneels verläuft und mittels derer das Vakuumisolationspaneel besonders einfach montiert werden kann. Der vorgeformte zweite Bestandteil kann nach dem Einsetzen in die durch die nicht vollständige Umhüllung des Vakuumisolationspaneels freigebliebene Aussparung mit den überlappenden Bereichen des ersten Bestandteiles verschweißt, verklebt oder gesiegelt werden. Nach vollständigem Evakuieren des Vakuumisolationspaneels liegen die Umhüllung und somit auch der vorgeformte und/oder funktionalisierte Bestandteil eng am Wärmedämm- oder Stützkörper an.

Als besonders günstig wird angesehen, wenn zur Umhüllung des Wärmedämm- oder Stützkörpers wenigstens der erste Bestandteil in Siegelbalken eingespannt ist. Zur teilweisen Umhüllung führen die Siegelbalken den ersten Bestandteil der Umhüllung um den Wärmedämm- oder Stützkörper bis zur festgelegten oder durch die Dimension des ersten Bestandteiles bestimmten Einsetzposition für den zweiten Bestandteil. Nach Einsetzen des zweiten Bestandteils bewirken die Siegelbalken ein Verschweißen oder Versiegeln der überlappenden Bereiche der Bestandteile unter Bildung einer Siegelnaht oder Siegellasche. In einem weiteren Schritt können durch die Siegelbalken Anlegen und Fixieren der Siegellasche am Stützkörper durchgeführt werden.

In einer weiteren bevorzugten Ausführungsform der vorliegenden Erfindung ist vorgesehen, dass in einem weiteren Verfahrensschritt der zweite Bestandteil der Umhüllung über einem Formschacht aufgespannt und durch entsprechende Presstempel verformt an den Stützkörper angelegt wird. Der Presstempel kann dabei auch als Gegenhalter für die Siegelung der Bestandteile verwendet werden. Der Formschacht ist in seiner Dimension variabel und ermöglicht somit die Anpassung des zweiten Bestandteils an die durch den ersten Bestandteil der Umhüllung freigelassene Aussparung. Die Ausführungsform ermöglicht es somit, variabel auf verschiedene Dimensionen und Ausformungen des Vakuumisolationspaneels zu reagieren. Durch eine entsprechende Gestaltung des Formschachts können beispielsweise auch runde Umhüllungsbestandteile oder Bestandteile mit frei konfigurierbarer Formgebung und die entsprechenden Vakuumisolationspaneele realisiert werden.

Weitere Vorteile, Merkmale und Besonderheiten der Erfindung ergeben sich aus der nachfolgenden Beschreibung bevorzugter, jedoch nicht beschränkender

Ausführungsformen der Erfindung anhand der schematischen und nicht maßstabsgetreuen Zeichnungen. Es zeigen:
- Fig. 1: eine bevorzugte Ausführungsform des erfindungsgemäßen Vakuumisolationspaneels vor dem Dichtsiegeln in perspektivischer Darstellung und
- Fig. 2: eine bevorzugte Ausführungsform des Vakuumisolationspaneels mit einer in die Aussparung eingesetzten Kunststoffschiene in Vorderansicht.

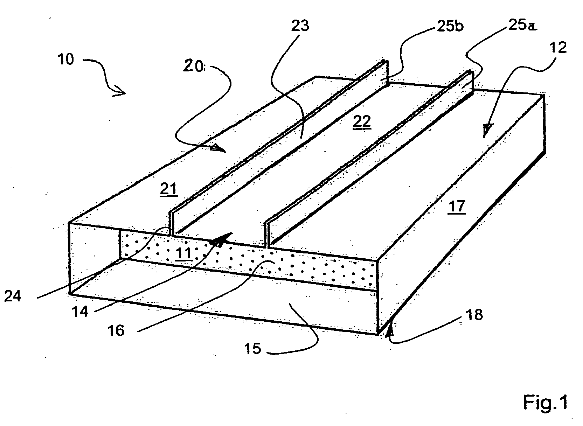

Fig. 1 zeigt eine Ausführungsform des erfindungsgemäßen Vakuumisolationspaneels 10. Die den Stützkörper 11 vollständig umschließende Umhüllung 20 besteht hier aus zwei Bestandteilen 21, 22. Der erste, flächenmäßig größere Bestandteil 21 wird zum Paneelkern 11 positioniert, z. B. indem der erste Bestandteil 21 horizontal unter dem Paneelkern 11 hindurch und zur Oberseite 12 des Stützkörpers 11, die eine der Hauptflächen des Vakuumisolationspaneels darstellt, geführt wird. Der erste Bestandteil 21 bedeckt dabei die Oberseite 12 des Stützkörpers 11 jedoch nur teilweise, im Mittelbereich 14 wurde ein Streifen der Umhüllung 20 ausgespart. In diese Aussparung 14 wurde der zweite Bestandteil 22 der Umhüllung 20 eingesetzt. Nach dem Einsetzen des zweiten Bestandteils 22 wurden die überlappenden Bereiche 23 senkrecht nach oben gezogen, sofern diese nicht bereits so vorgeformt sind, und die aufeinander liegenden Innenseiten 24 der Bestandteile 21, 22 verschweißt.

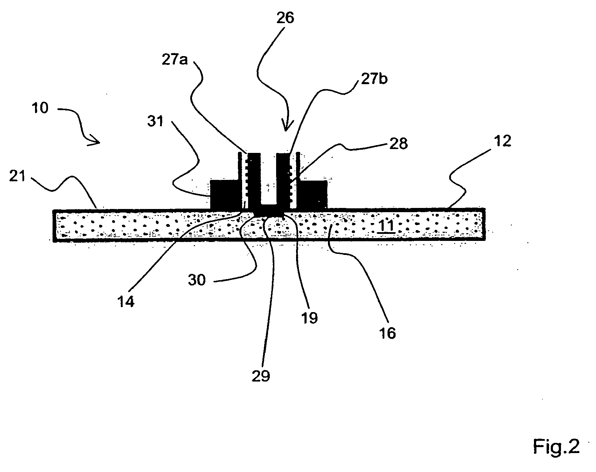

Der erste Bestandteil 21 der Umhüllung 20 wurde in eine bewegliche Schweißbacke 31 (vgl. Fig. 2) eingespannt und von dieser um den Paneelkern 11 herum geführt. Das Anlegen des folienartigen Bestandteils 21 kann jedoch auch mit vertikal und horizontal beweglichen Faltorganen erfolgen. Die Ausformung des zweiten Bestandteils 22 erfolgte über einen Formschacht (nicht dargestellt), in den das Material des zweiten Bestandteils 22, im Ausführungsbeispiel der Fig. 1 eine gasdichte Hochbarrierefolie, mittels eines Presstempels (nicht dargestellt) eingedrückt und an den Paneelkern 11 angelegt wurde. Der Formschacht wies dabei die Dimensionen der Aussparung 14 auf, in die der zweite Bestandteil 22 eingesetzt werden sollte. Der Paneelkern 11 wurde im Ausführungsbeispiel aus mikroporösem Material gepresst und ist daher ohne die stützende Wirkung der Umhüllung 20 besonders anfällig für mechanische Beanspruchung. Die Bestandteile 21, 22 werden nach vollständiger Umhüllung des Stützkörpers 11 verschweißt. Hierbei dient der Pressstempel als Gegenhalter für die Schweißbacken 31, die auch als Pressstempel dienen können (ggf. mit integrierten Siegelschienen).

Die Bestandteile weisen im Bereich der Siegellaschen 25a, b eine Beschichtung auf, die zum einen eine leichtere Siegelung ermöglicht und zum anderen die Barriereeigenschaften der Siegellaschen 25a, b verbessert. Die durch Verschweißen an den überlappenden Bereichen der Bestandteile 21, 22 entstehenden Siegellaschen 25a,b stehen zunächst senkrecht vom Paneelkern 11 ab. Im nachfolgenden Arbeitsschritt werden diese Siegellaschen 25a, b an die Oberseite 12 des fertigen Vakuumisolationspaneels 10 flach angelegt und mit der Umhüllung 20 verschweißt oder verklebt. Die Überstände 15 der Umhüllung 13 an den Stirnseiten 16 des Stützkörpers 11 werden anschließend in einem weiteren Verfahrensschritt an den Stirnseiten 16 des Stützkörpers 11 eingefaltet, wie an sich bekannt. Durch die Position der Siegellaschen 25a, b nur an einer der Hauptflächen weist das fertige Vakuumisolationspaneel nur an den Stirnseiten 16 Faltungen auf und verfügt somit an den Längsseiten 17 sowie an der vom Betrachter abgewandten Unterseite 18 über vollständig ebene Fügeflächen. Dadurch wird ein nahezu wärmebrückenfreies Stoßen der Seitenkanten 17 und Unterseiten 18 verschiedener Vakuumisolationspaneele 10 aneinander möglich.

Fig. 2 zeigt das erfindungsgemäße Vakuumisolationspaneel 10 in Schnittansicht. Anstelle eines in Materialart und -stärke dem ersten Bestandteil 21 vergleichbaren zweiten Bestandteils 22 wurde hier eine Schiene 26 aus Kunststoff in die Aussparung 14 an der Oberseite 12 des Stützkörpers 11 eingesetzt. Diese weist an ihren dem ersten Bestandteil 21 der Umhüllung 11 zugewandten Seitenkanten 27a, b funktionelle siegelfähige Beschichtungen 28 auf. Nach Anbringen des ersten Bestandteils 21 am Paneelkern 11 werden die an den Seitenkanten 27a, b der Schiene 26 anliegenden Bereiche des ersten Bestandteils 21 mit der Schiene 26 verschweißt. Um die Dämmungseigenschaften des fertigen Vakuumisolationspaneels 10 nicht zu beeinflussen, weist die Schiene 26 an ihrer dem Paneelkern 11 zugewandten Oberfläche 29 eine diffusionsdichte Beschichtung auf.

Um den Halt der Schiene 26 weiter zu verbessern, wurde im Paneelkern 11 eine Ausnehmung 19 vorgesehen, in die ein Fortsatz 30 eingesetzt wird, der an der dem Paneelkern 11 zugewandten Oberfläche 29 der Schiene 26 angeformt ist. Der erste Bestandteil 21 der Umhüllung 11 wurde in Siegelbalken 31 eingespannt und von diesen zur teilweisen Umhüllung bis zu einer festgelegten Einsetzposition für die Schiene 26 um den Paneelkern 11 herumgeführt. Nach Einsetzen der Schiene 26 pressen die Siegelbalken 31 den überlappenden Bereich des ersten Bestandteils 21 an die Schiene 26 und bewirken ein Verschweißen von erstem Bestandteil 21 und Schiene 26. Die Schiene 26 weist im Berührungsbereich mit dem ersten Bestandteil 21 eine ORMOCER®-Schicht auf, um eine zusätzliche Diffusionsbarriere an dieser besonders empfindlichen Siegelstelle zu schaffen. Nach dem Einfalten der Überstände 15 an den Stirnseiten 16 des Stützkörpers 11 erfolgt das Evakuieren und vollständige Versiegeln des Vakuumisolationspaneels 10. Um das Vakuumisolationspaneel 10 gegen mechanische Beschädigungen zu schützen, kann es direkt nach der Fertigstellung in einer automatischen Kaschierungs- oder Einschäumungsanlage entsprechend weiterverarbeitet werden.

### Bezugszeichenliste

- 10: = Vakuumisolationspaneel
- 11: = Stützkörper
- 12: = Oberseite/Hauptfläche des Paneelkerns
- 14: = Mittelbereich
- 15: = Überstand
- 16: = Stirnseite
- 17: = Längsseite
- 18: = Unterseite
- 19: = Ausnehmung
- 20: = Umhüllung
- 21: = erster Bestandteil
- 22: = zweiter Bestandteil
- 23: = überlappender Bereich
- 24: = Innenseite
- 25a, b: = Siegellaschen
- 26: = Schiene
- 27a, b: = Seitenkante
- 28: = siegelfähige Beschichtung
- 29: = Oberfläche
- 30: = Fortsatz
- 31: = Schweißbacke

## Patentansprüche

1. Vakuumisolationspaneel (10) mit einem Stützkörper (11) in einer gasdichten Umhüllung (20), wobei die gasdichte Umhüllung (20) wenigstens zwei Bestandteile (21, 22), insbesondere Folienabschnitte, aufweist, die über beabstandete Siegelnähte/-laschen (25a, 25b) verbunden sind, wobei die Siegelnähte/-laschen (25a, b) an einer Hauptfläche (12) des Vakuumisolationspaneels (10) angeordnet sind, **dadurch gekennzeichnet, daß** die vom Stützkörper (11) abweisenden Enden der Siegelnähte/-laschen (25a, b) aufeinander zuweisend gefaltet am Stützkörper (11) in dessen Mittelbereich angeordnet sind.

2. Vakuumisolationspaneel (10) nach Anspruch 1, **dadurch gekennzeichnet, daß** die Bestandteile (21, 22), insbesondere im Bereich der Siegelnähte/-laschen (25a, 25b), eine funktionelle Beschichtung (28) aufweisen.

3. Vakuumisolationspaneel (10) nach Anspruch 1 oder 2, **dadurch gekennzeichnet, daß** die Bestandteile (21, 22) aus unterschiedlichen Materialien bestehen und/oder verschiedene Materialstärken aufweisen.

4. Vakuumisolationspaneel (10) nach einem der vorhergehenden Ansprüche, **dadurch gekennzeichnet, daß** einer der Bestandteile (21, 22) vorgeformt, insbesondere als Schiene (26) ausgebildet ist.

5. Vakuumisolationspaneel (10) nach einem der vorhergehenden Ansprüche, **dadurch gekennzeichnet, daß** die gasdichte Umhüllung (20) an den Stirnseiten (16) des Stützkörpers (11) eingefaltet ist.

6. Verfahren zur Herstellung eines Vakuumisolationspaneels (10) mit einem Stützkörper (11) und einer gasdichten Umhüllung (20), insbesondere Folienumhüllung, wobei die gasdichte Umhüllung (20) wenigstens zwei Bestandteile (21, 22) insbesondere Folienabschnitte, aufweist, umfassend die Schritte:
- Umhüllen des Stützkörpers (11) mit einem ersten Bestandteil (21) der gasdichten Umhüllung (20) unter Aussparung eines Bereichs (14) in wenigstens einer Hauptfläche (12) des Stützkörpers (11),
- Einsetzen wenigstens eines zweiten Bestandteiles (22) der gasdichten Umhüllung (20) in den ausgesparten Bereich (14),
- Verbinden der Bestandteile (21, 22) unter Bildung je einer Siegelnaht/-lasche (25a, 25b), wobei die Siegelnähte/-laschen (25a, 25b) aufeinander zugefaltet, flach an eine Hauptfläche (12) des Stützkörpers (11) in deren Mittelbereich angelegt werden,
- Evakuieren der gasdichten Umhüllung (20),
- Versiegeln der gasdichten Umhüllung (20).

7. Verfahren nach Anspruch 6, **dadurch gekennzeichnet, daß** der Überstand (15) der Umhüllung (20) an wenigstens einer der Stirnseiten (16) des Stützkörpers (11) eingefaltet wird.

8. Verfahren nach einem der Ansprüche 6 bis 8, **dadurch gekennzeichnet, daß** der zweite Bestandteil (22) aus unterschiedlichem Material gefertigt ist und/oder eine vom ersten Bestandteil (21) abweichende Materialstärke aufweist und/oder vorgeformt, insbesondere als Schiene (26) oder Leiste ausgebildet ist.

## Claims

1. A vacuum insulation panel (10) with a support body (11) in a gas-tight enclosure (20), wherein the gas-tight enclosure (20) comprises at least two components (21, 22), in particular film sections, which are joined by spaced-apart sealing seams/flaps (25a, 25b), wherein the sealing seams/flaps (25a, b) are disposed on a main surface (12) of the vacuum insulation panel (10), **characterised in that** the ends of the sealing seams/flaps (25a, b) facing away from the support body (11) are disposed, folded pointing towards one another, on the support body (11) in its central region.

2. The vacuum insulation panel (10) according to claim 1, **characterised in that** the components (21, 22), in particular in the region of the sealing seams/flaps (25a, 25b), comprise a functional coating (28).

3. The vacuum insulation panel (10) according to claim 1 or 2, **characterised in that** the components (21, 22) are made of different materials and/or have different material thicknesses.

4. The vacuum insulation panel (10) according to any one of the preceding claims, **characterised in that** one of the components (21, 22) is preformed, in particular constituted as a bar (26).

5. The vacuum insulation panel (10) according to any one of the preceding claims, **characterised in that** the gas-tight enclosure (20) is folded in at the end faces (16) of the support body (11).

6. A method for producing a vacuum insulation panel (10) with a support body (11) and a gas-tight enclosure (20), in particular a film enclosure, wherein the gas-tight enclosure (20) comprises at least two components (21, 22), in particular film sections, comprising the steps:
- enclosing the support body (11) with a first component (21) of the gas-tight enclosure (20) while recessing a region (14) in at least one main surface (12) of the support body (11),
- inserting at least one second component (22) of the gas-tight enclosure (20) into the recessed region (14),
- joining the components (21, 22) thereby forming a sealing seam/flap (25a, 25b) in each case, wherein the sealing seams/flaps (25a, 25b) are laid flat, folded towards one another, on a main surface (12) of the support body (11) in its central region,
- evacuating the gas-tight enclosure (20),
- sealing the gas-tight enclosure (20).

7. The method according to claim 6, **characterised in that** the surplus length (15) of the enclosure (20) at at least one of the end faces (16) of the support body (11) is folded in.

8. The method according to any one of claims 6 to 8, **characterised in that** the second component (22) is produced from a different material and/or has a material thickness differing from the first component (21) and/or is preformed, in particular constituted as a bar (26) or a strip.

## Revendications

1. Panneau d'isolation (10) par le vide, avec un corps d'appui (11) dans une enveloppe (20) étanche au gaz, l'enveloppe (20) étanche au gaz comportant au moins deux éléments (21, 22), notamment parties de film, qui sont assemblés par l'intermédiaire de cordons/languettes de soudure (25a, 25b), les cordons/languettes de soudure (25a, b) étant placé(e)s sur une surface principale (12) du panneau d'isolation (10) par le vide, **caractérisé en ce que** les extrémités opposées au corps d'appui (11) des cordons/languettes de soudure (25a, b) sont placées en étant plissées en se faisant face sur le corps d'appui (11) dans la zone centrale de celui-ci.

2. Panneau d'isolation (10) par le vide selon la revendication 1, **caractérisé en ce que** les éléments (21, 22) comportent un revêtement fonctionnel (28), notamment dans la région des cordons/languettes de soudure (25a, 25b).

3. Panneau d'isolation (10) par le vide selon la revendication 1 ou 2, **caractérisé en ce que** les éléments (21, 22) sont constitués de matières différentes et/ou présentent des épaisseurs de matières différentes.

4. Panneau d'isolation (10) par le vide selon l'une quelconque des revendications précédentes, **caractérisé en ce que** l'un des éléments (21, 22) est préformé, notamment constitué en tant que rail (26).

5. Panneau d'isolation (10) par le vide selon l'une quelconque des revendications précédentes, **caractérisé en ce que** l'enveloppe (20) étanche au gaz est repliée sur les faces frontales (16) du corps d'appui (11).

6. Procédé destiné à la fabrication d'un panneau d'isolation (10) par le vide, avec un corps d'appui (11) et une enveloppe (20) étanche au gaz, notamment une enveloppe en film, l'enveloppe (20) étanche au gaz comportant au moins deux éléments (21, 22), notamment parties de film, comprenant les étapes :
- envelopper le corps d'appui (11) d'un premier élément (21) de l'enveloppe (20) étanche au gaz, en réservant une région (14) dans au moins une surface principale (12) du corps d'appui (11),
- insérer au moins un deuxième élément (22) de l'enveloppe (20) étanche au gaz dans la région (14) réservée,
- assembler les éléments (21, 22) en formant chaque fois un cordon/une languette de soudure (25a, 25b), alors qu'on applique à plat sur une surface principale (12) du corps d'appui (11), dans la région centrale de celui-ci les cordons/languettes de soudure (25a, 25b), replié(e)s l'un(e) vers l'autre,
- évacuer l'enveloppe (20) étanche au gaz,
- sceller l'enveloppe (20) étanche au gaz.

7. Procédé selon la revendication 6, **caractérisé en ce qu'**on replie le débordement (15) de l'enveloppe (20) sur au moins l'une des faces frontales (16) du corps d'appui (11).

8. Procédé selon l'une quelconque des revendications 6 à 8, **caractérisé en ce que** le deuxième élément (22) est fabriqué dans une matière différentes et/ou présente une épaisseur de matière différente de celle du premier élément (21) et/ou est préformé, notamment conçu en tant que rail (26) ou que baguette.
